# EUROPÄISCHE PATENTSCHRIFT

(11) **EP 4 245 924 B1**
(45) Veröffentlichungstag und Bekanntmachung des Hinweises auf die Patenterteilung: **20.08.2025**
(21) Anmeldenummer: 23161452.0
(22) Anmeldetag: 13.03.2023
(51) Int. Cl.: E02D 35/00, E02D 27/32, E02D 27/00, E02D 27/42, B65D 90/12, A47G 29/14, A47G 29/12

(54) **HÖHENVERSTELLUNGSVORRICHTUNG FÜR EIN MOBILFUNDAMENT UND MOBILFUNDAMENTVORRICHTUNG**
HEIGHT ADJUSTMENT DEVICE FOR MOBILE FOUNDATION, AND MOBILE FOUNDATION DEVICE
DISPOSITIF DE RÉGLAGE DE HAUTEUR POUR FONDATION MOBILE ET DISPOSITIF DE FONDATION MOBILE

(30) Priorität: 14.03.2022 DE 102022105823
(43) Veröffentlichungstag der Anmeldung: 20.09.2023
(73) Patentinhaber: Deutsche Post AG, 53113 Bonn (DE)
(72) Erfinder: DAUTZ, Christoph, 53225 Bonn (DE); NÄGEL, Ulf, 53919 Weilerswist (DE); SCHÜLLER, Jürgen, 52074 Aachen (DE)
(74) Vertreter: Michalski Hüttermann & Partner Patentanwälte mbB

(56) Entgegenhaltungen:
- WO-A1-2007/088376
- WO-A1-93/24920
- WO-A2-2011/047401
- DE-U1- 20 200 259
- JP-A- 2006 241 929
- US-A1- 2003 033 760

## Beschreibung

### Technisches Gebiet

Die Erfindung betrifft eine Höhenverstellungsvorrichtung für ein Mobilfundament, insbesondere für einen Betonsockel.

Zudem betrifft die Erfindung eine Mobilfundamentvorrichtung umfassend ein Mobilfundament und die obige Höhenverstellungsvorrichtung.

Weiterhin betrifft die Erfindung ein System umfassend die obige Mobilfundamentvorrichtung und eine Packstation.

### Hintergrund der Erfindung

Wenn Vorrichtungen wie Container, Werbetafelträger oder Packstationen im Außenraum aufgestellt werden, ist es notwendig diese vor Diebstahl und/oder vor einem Umkippen durch Wind zu schützen. Dies kann beispielsweise über geeignete Verankerungen im Untergrund erfolgen. Insbesondere wenn die Vorrichtungen lediglich temporär aufgestellt werden sollen und/oder wenn der Untergrund es nicht erlaubt die Vorrichtung direkt im Untergrund zu verankern, haben sich mobile Fundamente - auch Mobilfundamente genannt - zur Sicherung der Vorrichtung und/oder zur Bereitstellung eines planen Untergrundes zum Aufstellen der Vorrichtung bewährt. Mobilfundamente finden unter anderem Anwendung als Fundamente für Werbetafelträger, als Sockel für Litfaßsäulen und/oder als Untergrund für Packstationen.

Oftmals sind die Mobilfundamente als Betonbausteine und/oder Betonsockel ausgestaltet, können aber je nach Anwendungsfall auch aus anderen geeigneten Materialien gefertigt sein.

Nachteilig an bekannten Mobilfundamenten ist, dass diese keinen Niveauausgleich für einen unebenen und/oder schrägen Untergrund erlauben. Entsprechend muss bei einem unebenen und/oder schrägen Untergrund dieser vor Aufstellung des Mobilfundamentes erst begradigt werden, was aufwändig ist und mit zusätzlichen Kosten verbunden ist. Zudem kann in der Regel ein Ausgleichen eines unebenen und/oder schrägen Untergrundes nicht mehr nach dem Aufstellen des Mobilfundamentes oder sogar nach Anbringen der Vorrichtung, wie der Packstation, auf dem Mobilfundament erfolgen. In anderen Worten erlauben bekannte Mobilfundamente kein nachträgliches Ausgleichen von Unebenheiten und/oder Neigungen des Untergrundes und sind somit in ihrem Einsatz beschränkt.

Die Druckschrift US 2003/033760 A1 beschreibt eine Höhenverstellungsvorrichtung für ein Mobilfundament, umfassend eine Stange mit einem Gewindeabschnitt, eine auf dem Gewindeabschnitt verstellbar gehaltene und eine Abstützfläche aufweisende Gewindeplatte mit der Stange verbunden, wobei ein Drehlager die Verstellung der Abstützfläche ermöglicht, und ein einen Hohlraum aufweisendes Rohr.

Die Druckschrift WO 2011/047401 A2 betrifft ein Fundamentsystem zur lastabtragenden Aufnahme eines Gehäuses oder von wenigstens einem Gehäusemodul eines Selbstbedienungsautomaten, mit wenigstens einem Sockelelement, welches wenigstens eine Abstützfläche für ein Gehäuse oder für wenigstens ein Gehäusemodul eines Selbstbedienungsautomaten aufweist. Dabei umfasst das Sockelelement einen Betonkörper und wenigstens ein darauf abgestütztes, metallisches Tragelement, an welchem die wenigstens eine Abstützfläche für ein Gehäuse oder Gehäusemodul eines Selbstbedienungsautomaten ausgebildet ist, und das metallische Tragelement ist mittels wenigstens einer Einstellvorrichtung in Bezug auf den Betonkörper des Sockelelementes ausnivellierbar.

Die Druckschrift WO 2007/088376 A1 beschreibt eine tragbare Fundamentbaugruppe für ein Bauwerk, die Folgendes umfasst: ein Fundamentelement, das dazu geeignet ist, auf dem Boden zu stehen, und ein Stützelement mit einer Stützfläche, die so angepasst ist, dass sie an einer ausgewählten Stelle mit der Struktur in Eingriff kommt. Das Stützelement ist zudem mit einem Basiselement und Höhenverstellmitteln versehen, die sich im Basiselement befinden.

Die Druckschrift JP 2006 241929 A löst das Problem der Bereitstellung eines höhenverstellbaren Abstandshalters, der den zur Erzielung einer vorgegebenen Höheneinstellung erforderlichen Bewegungsbetrag um die Hälfte reduzieren kann und als relativ kleiner Abstandshalter eine ausreichende Installationsfläche beanspruchen kann.

Die Druckschrift DE 202 00259 U1 beschreibt einen Postverteiler-Container mit einem geschlossenen Gehäuse, in dessen Innenraum eine festgelegte Anzahl von Postabholfächern, sowohl horizontal als auch/oder vertikal, angeordnet sind, die von Innen nur von einem Postbediensteten zugänglich sind und von außen ausschließlich vom Postempfänger geöffnet werden können.

Die Druckschrift WO 93/24920 A1 betrifft eine Werbesäule mit von außen sichtbaren Werbe- oder Anzeigemitteln, wobei der obere Abschnitt der Säule als Träger für die Werbe- oder Anzeigemittel und der untere Abschnitt der Säule als Telefonzelle ausgebildet ist.

### Beschreibung der Erfindung

Ausgehend von dieser Situation ist es Aufgabe der vorliegenden Erfindung, Maßnahmen bereitzustellen, die das Aufstellen von Mobilfundamenten auf unebenen und/oder schrägen Untergründen vereinfachen. Insbesondere sollen Maßnahmen bereitgestellt werden, die ein Ausgleichen von unebenen und/oder schrägen Untergründen nach Aufstellen des Mobilfundamentes und/oder nach Anbringen einer Vorrichtung wie eine Packstation auf dem Mobilfundament ermöglichen.

Die Aufgabe der Erfindung wird durch die Merkmale des unabhängigen Anspruchs 1 gelöst.

Vorteilhafte Ausgestaltungen sind in den Unteransprüchen angegeben.

Demnach wird die Aufgabe gelöst durch eine Höhenverstellungsvorrichtung für ein Mobilfundament, umfassend
- eine Stange mit einem Gewindeabschnitt,
- eine auf dem Gewindeabschnitt verstellbar gehaltene und eine Abstützfläche aufweisende Gewindeplatte, und
- ein einen Hohlraum aufweisendes Rohr,
wobei das Rohr bei einer Außenseite in einer Mantelfläche wenigstens eine Wandaussparung umfasst, wodurch die Stange seitlich derart in den Hohlraum ragt, dass eine Längsachse der Stange nicht parallel zu einer Längsachse des Rohres ist, und wobei die Höhenverstellungsvorrichtung derart ausgestaltet ist, dass die Stange relativ zum Rohr wenigstens anteilig um eine Achse parallel zur Längsachse des Rohres drehbar ist.

Weiterhin wird die Aufgabe durch eine Mobilfundamentvorrichtung umfassend ein Mobilfundament und die obige Höhenverstellungsvorrichtung gelöst, wobei das Mobilfundament eine Oberseite mit einer Auflagefläche und eine der Oberseite gegenüberliegende bodenseitige Unterseite umfasst und wenigstens eine senkrecht zur Auflagefläche verlaufende und zur Unterseite durchgehende Öffnung umfasst, wobei die Stange mit einem dem Rohr abgewandten Ende in die Öffnung des Mobilfundamentes ragt und die Abstützfläche der Gewindeplatte an der Unterseite des Mobilfundamentes angeordnet ist.

Zudem wird die Aufgabe durch ein System umfassend eine Packstation und die obige Mobilfundamentvorrichtung gelöst.

Ein Aspekt der Erfindung ist, dass die Höhenverstellungsvorrichtung mit einfachen Mitteln erlaubt, ein Mobilfundament in seiner Höhe zu verstellen. Zur Verbindung der Höhenverstellungsvorrichtung mit dem Mobilfundament weist die Höhenverstellungsvorrichtung die Stange und die Gewindeplatte auf. Über den Gewindeabschnitt an der Stange lässt sich die Höhe der Gewindeplatte und damit auch die Höhe der Abstützfläche einstellen. Da bei der Mobilfundamentvorrichtung die Abstützfläche der Gewindeplatte an der Unterseite des Mobilfundamentes angeordnet ist, lässt sich somit durch Verändern der Lage der Gewindeplatte am Gewindeabschnitt die Höhe des Mobilfundamentes zum Untergrund verändern. Bevorzugt wird das Gewicht des Mobilfundamentes von der Gewindeplatte über die Stange auf das Rohr und somit den Untergrund geleitet. Diesbezüglich ist bevorzugt vorgesehen, dass das in den Hohlraum des Rohres ragende Ende der Stange auf einer der Aussparung gegenüberliegenden Innenseite des Rohres ruht.

Ein weiterer Aspekt der Erfindung ist, dass die Höhenverstellungsvorrichtung erlaubt, das Mobilfundament auf einem schrägen und/oder unebenen Untergrund aufzustellen und/oder den schrägen und/oder unebenen Untergrund auszugleichen. Dafür weist die Höhenverstellungsvorrichtung das als Standschiene und/oder Standfuß fungierende Rohr auf und ist derart ausgestaltet, dass die Stange relativ zum Rohr wenigstens anteilig um die Achse parallel zur Längsachse des Rohres drehbar ist. Dass die Stange relativ zum Rohr drehbar ist, bedeutet in anderen Worten auch, dass die Stange und das Rohr nicht drehfest miteinander verbunden sind, sondern dass die Stange in Bezug zum Rohr und/oder das Rohr in Bezug zur Stange bewegbar und insbesondere rotierbar ist. Das Rohr stellt den Hohlraum bereit, in den die Stange mit einem Ende hineinragt. Dafür weist das Rohr auf seiner Außenseite die Wandaussparung auf, wodurch die Stange in den Hohlraum des Rohres ragt. Mit Wandaussparung ist vorliegend eine Aussparung in einer Seitenwand des Rohres gemeint und nicht eine von zwei sich eventuell an den Stirnseiten des Rohres vorhandenen Öffnungen. In anderen Worten liegt die Aussparung also auf der Mantelfläche des Rohres. In noch anderen Worten ragt die Stange also seitlich in das Rohr hinein. Dadurch, dass die Wandaussparung auf der Mantelfläche des Rohres ist und die Stange mit einem Ende in den Hohlraum des Rohres ragt, ist die Längsachse der Stange nicht parallel zur Längsachse des Rohres. Zudem ist dadurch die Achse parallel zur Längsachse des Rohres, um die die Stange relativ zum Rohr wenigstens anteilig drehbar ist, auch nicht parallel zur Längsachse der Stange. In anderen Worten ist die wenigstens anteilige Drehung der Stange also keine Drehung der Stange um ihre Längsachse.

Besonders bevorzugt ermöglicht die Wandaussparung des Rohres, wodurch die Stange in den Hohlraum ragt, der Stange ein Spiel, derart dass die Stange relativ zum Rohr wenigstens mit der Drehbewegung bewegbar ist. Die Drehachse dieser Drehbewegung liegt bevorzugt direkt in der Wandaussparung des Rohres und verläuft parallel zur Längsachse des Rohres. Die Verbindung zwischen Rohr und Stange ist insbesondere derart, dass die Stange relativ zum Rohr wenigstens anteilig um die Drehachse drehbar ist. Wenigstens anteilig drehbar bedeutet besonders bevorzugt, dass relativ zum Rohr eine Rotationsbewegung der Stange um die Drehachse möglich ist, wobei die Rotationsbewegung nicht eine Rotationsbewegung um volle 360 Grad sein muss. Die Größe der Rotationsbewegung hängt bevorzugt von der Geometrie des Hohlraums des Rohres ab. Beispielsweise kann die Verbindung zwischen Rohr und Stange derart sein, dass eine Rotation der Stange relativ zum Rohr um 2 Grad möglich ist.

In anderen Worten kann die Stange also innerhalb des Hohlraums des Rohres in Bezug zu einer Ebene des Untergrundes, auf dem das Rohr als Standschiene und/oder Standfuß ruht, schräg in dem Hohlraum des Rohres ruhen. Derart ermöglicht die Vorrichtung eine Neigung des Untergrundes auszugleichen. Beispielsweise ist es derart möglich, dass bei einem geneigten Untergrund, auf dem das Rohr aufliegt, die Stange in Lotrichtung zum Untergrund zeigt und entsprechend in Bezug zur Ebene des Untergrundes schräg im Hohlraum ruht.

In einer weiteren bevorzugten Weiterbildung der Erfindung ist bevorzugt vorgesehen, dass die Verbindung zwischen Rohr und Stange derart ist, dass die Stange relativ zum Rohr um 360 Grad um eine weitere Drehachse drehbar ist, wobei die weitere Drehachse durch die Wandaussparung des Rohres verläuft und parallel zu einem Normalenvektor der Ebene des Untergrundes ist. Bevorzugt ist in anderen Worten also vorgesehen, dass die Stange und das Rohr im Wesentlichen die Funktion eines Kugelgelenkes erbringen, wodurch die Höhenverstellungsvorrichtung und die Mobilfundamentvorrichtung problemlos auf einem schrägen und/oder unebenen Untergrund aufgestellt werden können und die Neigung des Untergrundes ausgeglichen werden kann.

Im Hinblick auf den Gewindeabschnitt der Stange ist bevorzugt vorgesehen, dass es sich um einen Abschnitt mit einem Außengewinde handelt. Weiter bevorzugt ist das Außengewinde korrespondierend zu einem Innengewinde der Gewindeplatte ausgestaltet. Im Hinblick auf die Stange kann zudem vorgesehen sein, dass sich der Gewindeabschnitt lediglich über einen kleinen Bereich der Stange erstreckt. Bevorzugt ist allerdings vorgesehen, dass der Gewindeabschnitt sich über mehr als ein Drittel der Länge der Stange und weiter bevorzugt über mehr als die Hälfte der Länge der Stange erstreckt. Besonders bevorzugt handelt es sich bei der Stange um eine Gewindestange - also eine Stange die im Wesentlichen über ihre gesamte Länge ein Gewinde aufweist. Derart lässt sich auch die Höhe des Mobilfundamentes um einen großen Betrag verändern.

In Bezug zum Rohr ist gemäß einer weiteren bevorzugten Weiterbildung der Erfindung vorgesehen, dass das Rohr zwei zueinander parallele und bevorzugt plane Außenseiten umfasst und/oder dass das Rohr als Rechteckrohr ausgestaltet ist. Entsprechend kann das Rohr auf einfache Weise die Funktion der Standschiene und/oder des Standfußes der Höhenverstellungsvorrichtung übernehmen. Bevorzugt wird das Gewicht des Mobilfundamentes von der Gewindeplatte über die Stange auf das Rohr und insbesondere auf die der Wandaussparung gegenüberliegende plane Innenseite des Rohres übertragen. Besonders bevorzugt ist also der Querschnitt des Rohres rechteckig und/oder quadratisch. Weiter bevorzugt ist das Rohr als Metallrohr ausgestaltet.

Gemäß einer weiteren bevorzugten Weiterbildung der Erfindung ist vorgesehen, dass die Stange an einem dem Rohr abgewandten Ende eine Einrichtung zur Drehmomentübertragung umfasst. Bevorzugt handelt es sich dabei um eine Einrichtung zur Drehmomentübertragung mittels Formschluss. Beispielsweise kann die Stange an ihrem Ende einen Schraubenkopf umfassen. Bevorzugt besitzt das Ende der Stange einen Schlitz, ein Loch mit einem Innen-n-kant (bspw. Innensechskant), einem Innenvielzahn und/oder einem Innensechsrund. Bevorzugt ist die Einrichtung zur Drehmomentübertragung in ihrer Ausdehnung nicht größer als der Durchmesser der Stange. Weiter bevorzugt handelt es sich bei der Stange um einen Gewindestift. Die Einrichtung zur Drehmomentübertragung ermöglicht derart auf einfache Weise, dass die Lage der Gewindeplatte durch Drehen der Stange in Bezug zur drehfesten Gewindeplatte ermöglicht wird. Auf ein Drehen der Gewindeplatte um die drehfeste Stange kann also zum Verstellen der Höhe des Mobilfundamentes bevorzugt verzichtet werden.

Gemäß einer weiteren bevorzugten Weiterbildung der Erfindung ist vorgesehen, dass die Höhenverstellungsvorrichtung eine Mehrzahl an Stangen umfasst und dass das Rohr auf der Außenseite mehrere zur Anzahl an Stangen korrespondierende Wandaussparungen umfasst, wodurch die Stangen in den Hohlraum ragen. Besonders bevorzugt weise die Höhenverstellungsvorrichtung also nicht lediglich eine Stange und eine Gewindeplatte auf, sondern eine Mehrzahl an Stangen und für jede Stange eine Gewindeplatte. Das Rohr weist bevorzugt eine dazu korrespondierende Anzahl an Wandaussparungen auf, so dass jeweils eine Stange durch eine Wandaussparung in den Hohlraum des Rohres hineinragt. Besonders bevorzugt umfasst die Höhenverstellungsvorrichtung zwei Stangen und zwei Gewindeplatten und ein Rohr mit zwei Wandaussparungen. Weiter bevorzugt kann vorgesehen sein, dass die Höhenverstellungsvorrichtung eine Mehrzahl an Stangen und eine Mehrzahl an Rohren umfasst und dass die Gesamtzahl an Wandaussparungen bei der Mehrzahl an Rohren zu der Anzahl an Stangen korrespondiert.

Die Mehrzahl an Stangen, und besonders bevorzugt zwei Stangen in einem Rohr, ermöglichen auf besonders einfache Weise, dass mittels der Höhenverstellungsvorrichtung ein Gefälle des Untergrundes ausgeglichen wird, derart dass das Mobilfundament eine Auflagefläche aufweist, deren Normalenvektor in Lotrichtung weist. Insbesondere ist der Gefälleausgleich in alle Richtungen in der Ebene des Untergrundes möglich - spricht das Rohr muss also nicht in eine spezifische Richtung zum Gefälle angeordnet werden.

Wie bereits erwähnt betrifft die Erfindung auch die Mobilfundamentvorrichtung umfassend das Mobilfundament und die obige Höhenverstellungsvorrichtung. Die Aufgabe wird also auch gelöst von der Mobilfundamentvorrichtung umfassend das Mobilfundament und die Höhenverstellungsvorrichtung, wobei das Mobilfundament die Oberseite mit der Auflagefläche und die der Oberseite gegenüberliegende bodenseitige Unterseite umfasst und wenigstens eine senkrecht zur Auflagefläche verlaufende und zur Unterseite durchgehende Öffnung umfasst, wobei die Höhenverstellungsvorrichtung die Stange mit dem Gewindeabschnitt, die auf dem Gewindeabschnitt verstellbar gehaltene und die Abstützfläche aufweisende Gewindeplatte, und das den Hohlraum aufweisende Rohr umfasst, wobei das Rohr auf der Außenseite wenigstens die eine Wandaussparung umfasst, wodurch die Stange in den Hohlraum ragt, wobei die Stange mit dem dem Rohr abgewandten Ende in die Öffnung des Mobilfundamentes ragt und die Abstützfläche der Gewindeplatte an der Unterseite des Mobilfundamentes angeordnet ist, und wobei die Höhenverstellungsvorrichtung derart ausgestaltet ist, dass die Stange relativ zum Rohr wenigstens anteilig um die Achse parallel zur Längsachse des Rohres drehbar ist.

Die Mobilfundamentvorrichtung weist den Vorteil auf, dass nach Aufstellen der Mobilfundamentvorrichtung auf einem Untergrund die Mobilfundamentvorrichtung auf einfache Weise in der Höhe verstellt werden kann. Insbesondere ist es nicht notwendig, dass das als Standschiene und/oder Standfuß fungierende Rohr gedreht wird, wie dies beispielsweise bei Möbelfüssen üblich ist. Stattdessen kann durch Drehen an der Stange die Höhe des Mobilfundamentes verstellt werden. Besonders bevorzugt führt das Drehen der Stange dazu, dass sich die Lage der Gewindeplatte, auf deren Abstützfläche das Mobilfundament mit seiner Unterseite angeordnet ist, ändert, wodurch sich auch die Höhe des Mobilfundamentes zum Untergrund ändert. Zudem weist die Mobilfundamentvorrichtung den Vorteil auf, dass bei Aufstellung der Mobilfundamentvorrichtung auf einem Untergrund mit einem Gefälle, die Auflagefläche des Mobilfundamentes derart ausgerichtet werden kann, dass der Normalenvektor der Auflagefläche in Lotrichtung weist. Insbesondere ist der Gefälleausgleich in alle Richtungen in der Ebene des Untergrundes möglich.

Das als Standschiene fungierende Rohr, und insbesondere das Rechteckrohr, weist zudem den Vorteil auf, dass unabhängig vom Maß des eingestellten Gefälleausgleichs die Aufstandsfläche in Form der Auflagefläche des Rohres immer gleich ist. Entsprechend sind mit dem Rohr immer gleiche Flächenlasten sichergestellt. Mit anderen Worten, liegt das als Standschiene fungierende Rohr und insbesondere das Rechteckrohr, unabhängig von der Stärke des Gefälles des Untergrundes, jeweils flach auf dem Untergrund auf.

Gemäß einer weiteren bevorzugten Weiterbildung der Erfindung ist bevorzugt vorgesehen, dass die Mobilfundamentvorrichtung derart ausgestaltet ist, dass die Stange relativ zum Mobilfundament entlang einer Richtung senkrecht zur Auflagefläche verschiebbar ist, insbesondere mittels einer Drehbewegung der Stange um eine axiale Erstreckungsachse der Stange. In anderen Worten sind also bevorzugt die durchgehende Öffnung im Mobilfundament und der Durchmesser der Stange aufeinander abgestimmt, derart, dass die Stange in der durchgehenden Öffnung entlang der axialen Erstreckungsachse verschiebbar ist und von der Öffnung in der Bewegung geführt wird.

In diesem Zusammenhang ist gemäß einer weiteren bevorzugten Weiterbildung der Erfindung vorgesehen, dass das Mobilfundament zur drehfesten Lagerung der Gewindeplatte auf der Unterseite eine Aussparung umfasst. Besonders bevorzugt wird die Gewindeplatte an einer Drehbewegung relativ zum Mobilfundament durch Formschluss mit der Aussparung gehindert. Entsprechend führt eine Drehung an der Stange um die axiale Erstreckungsachse der Stange dazu, dass sich die Lage der Gewindeplatte an der Stange ändert, wodurch die Höhe der Abstützfläche verändert wird. Entsprechend verschiebt sich auch die Lage der Stange zum Mobilfundament. Weiterhin ist bevorzugt vorgesehen, dass die senkrecht zur Auflagefläche verlaufende und zur Unterseite durchgehende Öffnung des Mobilfundamentes in der Aussparung angeordnet ist.

Gemäß einer weiteren bevorzugten Weiterbildung der Erfindung ist vorgesehen, dass das Mobilfundament zum Einsenken des Rohres im Mobilfundament auf der Unterseite eine weitere Aussparung umfasst. Die weitere Aussparung weist den Vorteil auf, dass das als Standschiene und/oder Standfuß fungierende Rohr bevorzugt vollständig in der weiteren Aussparung untergebracht werden kann, so dass in einem Zustand in dem das Rohr in der weiteren Aussparung verschwindet, das Gewicht des Mobilfundamentes zu einem wesentlichen Anteil über die bodenseitige Unterseite des Mobilfundamentes auf den Untergrund übertragen wird. Erst beim Verstellen der Höhe des Mobilfundamentes aus dieser Position nach oben, indem bevorzugt durch Drehen an der Stange die Lage der Gewindeplatte verändert wird, wird die an der Abstützfläche angeordnete Unterseite des Mobilfundamentes nach oben gedrückt und das Gewicht des Mobilfundamentes wird über die Gewindeplatte und die Stange auf das Rohr übertragen.

Gemäß einer weiteren bevorzugten Weiterbildung der Erfindung ist in diesem Zusammenhang bevorzugt vorgesehen, dass die weitere Aussparung in einer Länge mit einer Länge des Rohres korrespondiert und/oder sich über die gesamte Unterseite des Mobilfundamentes erstreckt. Dies macht es besonders einfach, das Rohr in der weiteren Aussparung des Mobilfundamentes zu versenken.

Zudem ist in diesem Zusammenhang weiter bevorzugt vorgesehen, dass eine Breite der weiteren Aussparung wenigstens einer Breite des Rohres entspricht. Besonders bevorzugt ist die Breite der Aussparung größer als die Breite des Rohres und entspricht wenigstens der Läng einer geraden Strecke, die zwei Rohrseiten verbindet, wobei in einem Zustand der maximale Auslenkung der Stange um die Achse parallel zur Längsachse des Rohrer, die Strecke senkrecht zur Stange steht und die zwei Rohrseiten mit einer kürzesten Distanz verbindet.

Es ist also bevorzugt vorgesehen, dass das Mobilfundament zur drehfesten Lagerung der Gewindeplatte gegenüber dem Mobilfundament auf der Unterseite die Aussparung umfasst und zum Einsenken des Rohres im Mobilfundament auf der Unterseite die weitere Aussparung umfasst. Gemäß einer weiteren bevorzugten Weiterbildung ist in diesem Zusammenhang vorgesehen, dass die Aussparung als Vertiefung in der weiteren Aussparung ausgestaltet ist. Bevorzugt entspricht am Ort der Vertiefung eine Gesamthöhe der weiteren Aussparung und der Vertiefung wenigstens der Summe einer Höhe des Rohres und einer Dicke der Gewindeplatte. Die Gesamthöhe bemisst sich bevorzugt vom tiefsten Punkt der bodenseitigen Unterseite des Mobilfundamentes. Eine Gesamthöhe, die bevorzugt wenigstens der Summe aus der Dicke der Gewindeplatte und der Höhe des Rohres entspricht, weist den Vorteil auf, dass das Rohr problemlos in der Unterseite des Mobilfundamentes eingesenkt werden kann.

Gemäß einer weiteren bevorzugten Weiterbildung der Erfindung ist bevorzugt vorgesehen, dass das Mobilfundament auf der Oberseite einen sich entlang der Auflagefläche erstreckenden vertikalen Fortsatz umfasst. Die Auflagefläche ist besonders bevorzugt eine plane Ebene, die erlaubt eine weitere Vorrichtung, wie eine Packstation, auf der Auflagefläche anzuordnen. Der vertikale Fortsatz hat den Vorteil, dass eine auf dem Mobilfundament angeordnete Vorrichtung seitlich vom Fortsatz abgestützt wird. Weiter bevorzugt umfass das Mobilfundament auf der Oberseite zwei sich aufeinander gegenüberliegenden Seiten der Auflagefläche erstreckende vertikale Fortsätze. Besonders bevorzugt weisen diese zwei Fortsätze unterschiedliche Höhen auf. Ein Fortsatz, der dazu ausgestaltet ist, zumindest anteilig an einer Rückseite einer auf der Auflagefläche anzuordnende Vorrichtung anzuliegen ist bevorzugt Höher als ein Fortsatz, der dazu ausgestaltet ist, zumindest anteilig an einer Vorderseite der auf der Auflagefläche anzuordnende Vorrichtung anzuliegen.

Gemäß einer weiteren bevorzugten Weiterbildung der Erfindung ist vorgesehen, dass die durchgehende Öffnung durch den vertikalen Fortsatz verläuft. Besonders bevorzugt verläuft die durchgehende Öffnung nicht durch die Auflagefläche. Da die Auflagefläche als Stellfläche für die Vorrichtung dient, weist der Verlauf der durchgehenden Öffnung durch den vertikalen Fortsatz den Vorteil auf, dass die Höhe des Mobilfundaments auch nach Aufstellung der Vorrichtung auf der Auflagefläche verstellbar ist.

Gemäß einer weiteren bevorzugten Weiterbildung der Erfindung ist zudem vorgesehen, dass das Mobilfundament Befestigungsmittel umfasst, die bevorzugt auf der Auflagefläche und/oder am vertikalen Fortsatz angebracht sind. Mittels der Befestigungsmittel kann auf einfache Weise eine Vorrichtung, wie ein Container eine Packstation oder Ähnliches mit dem Mobilfundament verbunden werden und/oder an dem Mobilfundament befestigt werden. Bevorzugt sind die Befestigungsmittel als Innengewinde ausgestaltet. Beispielsweise können insbesondere bei einem aus Beton gefertigten Mobilfundament Gewindeeinsätze in das Mobilfundament eingegossen sein.

Grundsätzlich kann das Mobilfundament aus einem beliebigen für den Einsatz im Außenraum geeigneten Material gefertigt sein. Gemäß einer weiteren bevorzugten Weiterbildung ist das Mobilfundament als Betonsockel und/oder Betonbaustein ausgestaltet. Dies stellt eine kostengünstige Möglichkeit dar, ein robustes und schweres Mobilfundament bereitzustellen.

Gemäß einer weiteren bevorzugten Weiterbildung der Erfindung ist vorgesehen, dass die Anzahl an weiteren Aussparungen zum Einsenken des Rohres in der Unterseite des Mobilfundamentes der Anzahl an Rohren entspricht und/oder dass die Anzahl an Aussparung zur drehfesten Lagerung der Gewindeplatte der Anzahl an Gewindeplatten und/oder Stangen entspricht. Besonders bevorzugt wird eine Mobilfundamentvorrichtung bereitgestellt, die ein Mobilfundament und eine Höhenverstellungsvorrichtung umfasst, wobei das Mobilfundament die Oberseite mit der Auflagefläche und die der Oberseite gegenüberliegende bodenseitige Unterseite umfasst, zwei weitere Aussparungen zum Einsenken des Rohres in der Unterseite des Mobilfundamentes, und vier senkrecht zur Auflagefläche verlaufende und zur Unterseite durchgehende Öffnung umfasst, wobei die Höhenverstellungsvorrichtung vier Stangen mit je einem Gewindeabschnitt, vier jeweils auf dem Gewindeabschnitt verstellbar gehaltene und die Abstützfläche aufweisende Gewindeplatten, und zwei jeweils den Hohlraum aufweisende Rohre umfasst, wobei jedes Rohr auf der Außenseite zwei Wandaussparungen umfasst, wodurch jeweils eine Stange in den Hohlraum ragt, wobei jede Stange mit dem dem Rohr abgewandten Ende in eine Öffnung des Mobilfundamentes ragt, die Abstützflächen der Gewindeplatten an der Unterseite des Mobilfundamentes angeordnet sind, und wobei die Höhenverstellungsvorrichtung derart ausgestaltet ist, dass jede Stange relativ zu jenem Rohr, in dessen Hohlraum das Ende der Stange ragt, wenigstens anteilig um eine Achse parallel zur Längsachse desjenigen Rohres drehbar ist.

Die Mobilfundamentvorrichtung weist also bevorzugt zwei Rohre auf, die als Standschienen und/oder Standfüße fungieren, wobei jedes Rohr jeweils zwei Wandaussparungen für zwei Stangen umfasst. Derart kann auf besonders einfache und kostengünstige Weise eine Neigung des Untergrundes ausgeglichen werden und die Höhe des Mobilfundamentes verändert werden.

Wie bereits erwähnt betrifft die Erfindung zudem das System umfassend die Packstation und die Mobilfundamentvorrichtung. Bevorzugt ist die Packstation auf der Auflagefläche des Mobilfundamentes angeordnet. Zudem ist bevorzugt vorgesehen, dass der vertikale Fortsatz des Mobilfundamentes an eine Rückwand der Packstation grenzt. Entsprechend kann der vertikale Fortsatz die Packstation weiter stabilisieren.

Weiter bevorzugt ist zudem vorgesehen, dass die Packstation an dem Mobilfundament befestigt ist, besonders bevorzugt mittels den an den Mobilfundament angebrachten Befestigungsmitteln. Weiter bevorzugt ist vorgesehen, dass ein Boden der Packstation mit der Auflagefläche verbunden ist und/oder dass die Rückwand der Packstation mit dem vertikalen Fortsatz verbunden ist.

Weiterer technische Merkmale und Vorteile des Systems und der Mobilfundamentvorrichtung erschließen sich dem Fachmann aus der Beschreibung der Höhenverstellungsvorrichtung.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigt
- Fig. 1: eine schematische Darstellung eines Systems umfassend eine Mobilfundamentvorrichtung und eine Packstation, gemäß einem bevorzugten Ausführungsbeispiel der Erfindung,
- Fig. 2: eine schematische Schnittdarstellung des Systems aus Figur 1 entlang der Linie A-A,
- Fig. 3: eine schematische Schnittdarstellung des Systems aus Figur 1 entlang der Linie B-B, und
- Fig. 4: eine schematische Darstellung einer Mobilfundamentvorrichtung, gemäß einem weiteren bevorzugten Ausführungsbeispiel der Erfindung.

### Detaillierte Beschreibung der Ausführungsbeispiele

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

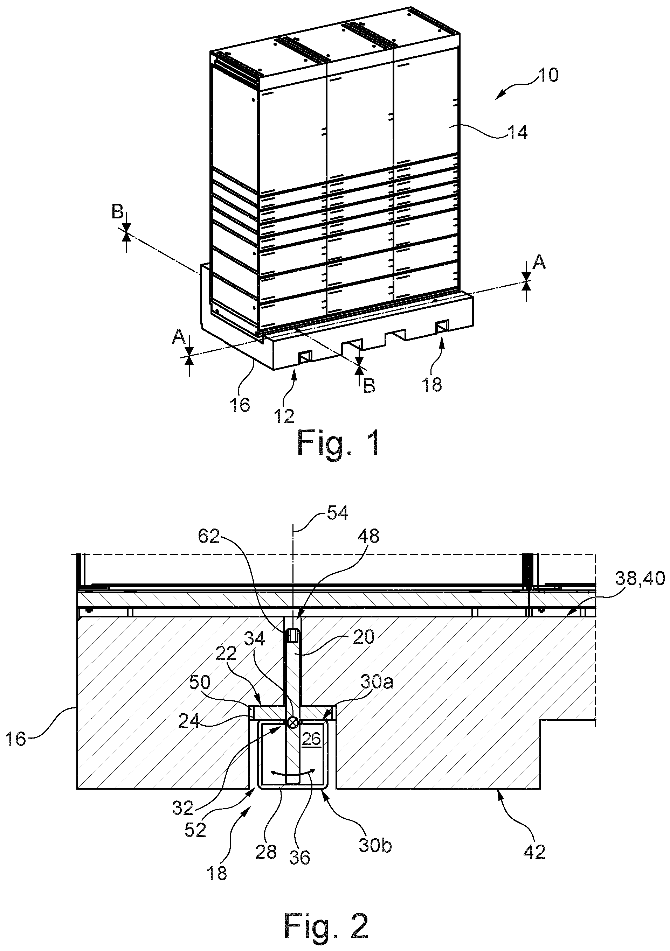

Figur 1 zeigt eine schematische Darstellung eines Systems 10 umfassend eine Mobilfundamentvorrichtung 12 und eine Packstation 14. Die Mobilfundamentvorrichtung 12 umfasst ihrerseits wiederum ein in diesem Ausführungsbeispiel als Betonsockel 16 ausgestaltetes Mobilfundament 16 und eine im Folgenden näher erläuterte Höhenverstellungsvorrichtung 18, mittels derer das Mobilfundament 16 in der Höhe verstellbar ist.

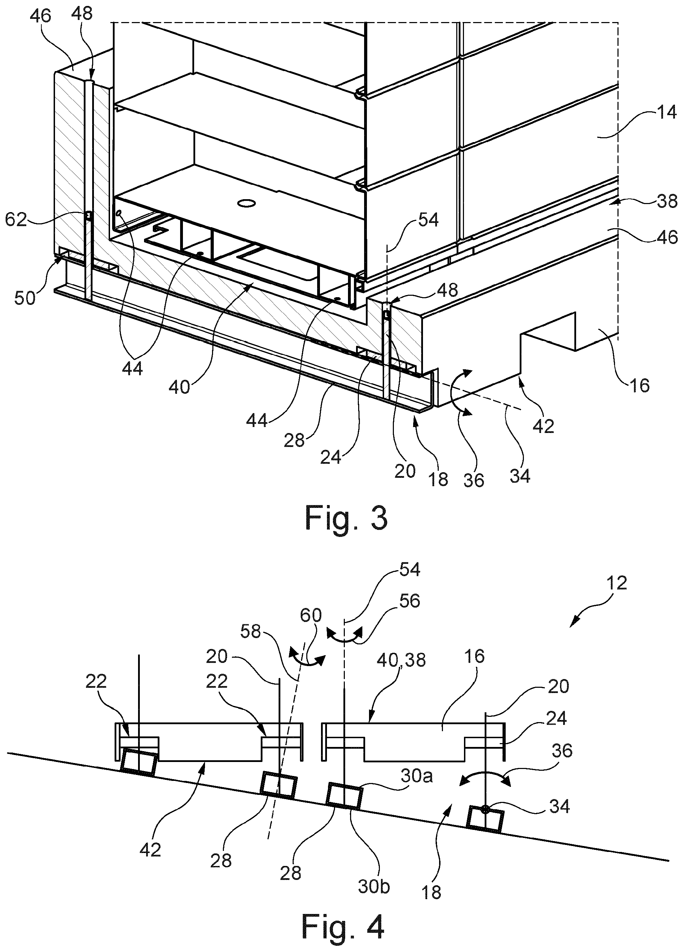

Figuren 2 und 3 stellen Schnittdarstellungen durch das in Figur 1 gezeigte System 10 entlang der in Figur 1 mit A und B gekennzeichneten Linien dar. In den Figuren 2 und 3 ist zu erkennen, dass die Höhenverstellungsvorrichtung 18 eine Stange 20 mit einem sich im vorliegenden Ausführungsbeispiel über die gesamte Länge der Stange 20 erstreckenden Gewindeabschnitt, eine auf dem Gewindeabschnitt verstellbar gehaltene und eine Abstützfläche 22 aufweisende Gewindeplatte 24, und ein einen Hohlraum 26 aufweisendes Rohr 28 umfasst. Das Rohr 28 ist vorliegend als Rechteckrohr 28 ausgestaltet und weist zwei zueinander parallele Außenseiten 30a, 30b auf. Auf einer der Außenseiten 30a umfasst das Rohr 28 eine Wandaussparung 32, durch die die Stange 20 in den Hohlraum 26 ragt. Die Wandaussparung 32 lässt der Stange 20 ein Spiel, so dass die Stange 20 relativ zum Rohr 28 wenigstens anteilig um eine Achse 34 parallel zur Längsachse des Rohres 28 drehbar ist. Die Drehachse 34 verläuft direkt durch die Wandaussparung 32 und liegt in Figur 2 senkrecht zur Zeichenebene. Entsprechend ist die Drehachse 34 in Figur 2 als Kreis mit Kreuz dargestellt. Die Drehbewegung ist in den Figuren 2 und 3 durch den Pfeil 36 angedeutet, wobei in Figur 2 die Stange 20 eine Drehbewegung in der Zeichenebene durchführt.

Insbesondere in Figur 3 ist zu erkennen, dass das Mobilfundament 16 zudem eine Oberseite 38 mit einer Auflagefläche 40 und eine der Oberseite 38 gegenüberliegende bodenseitige Unterseite 42 umfasst. Die Packstation 14 ist auf der Auflagefläche 40 angeordnet und mittels Gewindestiften 44 mit in das Mobilfundament 16 eingelassenen Befestigungsmitteln - vorliegend Gewindeeinsätze mit Innengewinde - verbunden. Die Auflagefläche 40 des Mobilfundamentes 16 wird an zwei Seiten von einem vertikalen Fortsatz 46 flankiert. Die Rückseite der Packstation 14 ist mit einem weiteren Gewindestift 44 mit dem an der Rückseite anliegenden vertikalen Fortsatz 46 verbunden.

Zur Verbindung des Mobilfundamentes 16 mit der Höhenverstellungsvorrichtung 18 weist das Mobilfundament 16 senkrecht zur Auflagefläche 40 verlaufende und zur Unterseite 42 durchgehende Öffnungen 48 auf. Vorliegend verlaufen die Öffnungen 48 durch die vertikalen Fortsätze 46. Wie insbesondere in Figur 2 zu erkennen ist, ragt die Stange 20 der Höhenverstellungsvorrichtung 18 mit einem dem Rohr 28 abgewandten Ende in die Öffnung 48 des Mobilfundamentes 16, wobei die Abstützfläche 22 der Gewindeplatte 24 an der Unterseite 42 des Mobilfundamentes 16 angeordnet ist.

Wie zudem gut in den Figuren 2 und 3 zu erkennen ist, weist das Mobilfundament 16 zur drehfesten Lagerung der Gewindeplatte 24 auf der Unterseite 42 eine Aussparung 50 auf, die durch Formschluss die Gewindeplatte 24 an einer Drehbewegung relativ zum Mobilfundament 16 hindert. Weiterhin weist das Mobilfundament 16 zum Einsenken der Rohre 28 im Mobilfundament 16 auf der Unterseite 42 weitere Aussparungen 52 auf. Wie Figu-ren 1 bis 3 zeigen, ermöglichen die weiteren Aussparungen 52, dass das als Standschiene fungierende Rohr 28 vollständig in der weiteren Aussparung 52 untergebracht werden kann, so dass in dem in den Figuren 1 bis 3 gezeigten Zustand das Gewicht des Mobilfundamentes 16 zu einem wesentlichen Anteil über die bodenseitige Unterseite 42 auf den Untergrund übertragen wird. Dafür erstrecken sich die weitere Aussparungen 52 über die gesamte Unterseite 42 des Mobilfundamentes 16. Weiterhin sind die Aussparungen 50 zur drehfesten Lagerung der Gewindeplatte 24 als Vertiefungen in den weiteren Aussparungen 52 ausgestaltet. Am Ort der Vertiefung entspricht zudem eine Gesamthöhe der weiteren Aussparung 52 und der Vertiefung 50 der Summe einer Höhe des Rohres 28 und einer Dicke der Gewindeplatte 24.

Figur 4 zeigt eine weitere schematisch Darstellung einer weiteren bevorzugten Ausführungsform der Mobilfundamentvorrichtung 12 umfassend das Mobilfundament 16 und die Höhenverstellungsvorrichtung 18. Bei dieser Ausführungsform weist das Mobilfundament 16 auf der Oberseite 38 keine vertikalen Fortsätze auf. Stattdessen wird die gesamte Oberseite 38 von der Auflagefläche 40 gebildet. In Figur 4 ist insbesondere die Höhenverstellungsfunktion und Neigungsausgleichsfunktion der Höhenverstellungsvorrichtung 18 anschaulich dargestellt. Durch Drehung an der Stange 20 um eine axialen Erstreckungsachse 54 der Stange 20, was in Figur 4 durch den Pfeil 56 symbolisch dargestellt ist, lässt sich die Lage der Gewindeplatte 24 verändern, wodurch die Lage der an der Abstützfläche 22 angeordnete Unterseite 42 des Mobilfundamentes 16 verändert wird. Bei einem geneigten Untergrund, wie in Figur 4 dargestellt, lässt sich über die Höhenverstellungsvorrichtung 18 die Auflagefläche 40 des Mobilfundamtes 16 horizontal einstellen und der Niveauunterschied ausgleichen. Insbesondere ist in Figur 4 ersichtlich, dass bei einem geneigten Untergrund die Stange 20 in Bezug zu den zwei zueinander parallele Außenseiten 30a, 30b des Rohres 28 schräg im Hohlraum 26 des Rohres 28 ruht.

Zudem ist in dem in Figur 4 gezeigten Ausführungsbeispiel schematisch erkennbar, dass die Verbindung zwischen Rohr 28 und Stange 20 derart ist, dass die Stange 20 relativ zum Rohr 28 um 360 Grad um eine weitere Drehachse 58 drehbar ist, was durch den Pfeil 60 illustriert ist. Die weitere Drehachse 58 verläuft dabei durch die Wandaussparung 32 des Rohres 28 und parallel zu einem Normalenvektor der Ebene des Untergrundes.

Zurückkommend auf das in den Figuren 1 bis 3 gezeigte Ausführungsbeispiel ist zudem insbesondere an den Figuren 2 und 3 ersichtlich, dass die Stange 20 an dem dem Rohr 28 abgewandten Ende eine Einrichtung zur Drehmomentübertragung 62 mittels Formschluss umfasst - vorliegend ein Loch mit einem Innensechskant.

### Bezugszeichenliste

| | |
|---|---|
| System | 10 |
| Mobilfundamentvorrichtung | 12 |
| Packstation | 14 |
| Mobilfundament, Betonsockel | 16 |
| Höhenverstellungsvorrichtung | 18 |
| Stange | 20 |
| Abstützfläche | 22 |
| Gewindeplatte | 24 |
| Hohlraum | 26 |
| Rohr, Rechteckrohr | 28 |
| Außenseite | 30 |
| Wandaussparung | 32 |
| Drehachse | 34 |
| Pfeil, Drehbewegung | 36 |
| Oberseite | 38 |
| Auflagefläche | 40 |
| Unterseite | 42 |
| Gewindestift | 44 |
| vertikaler Fortsatz | 46 |
| Öffnung | 48 |
| Aussparung | 50 |
| weitere Aussparung | 52 |
| axiale Erstreckungsachse der Stange | 54 |
| Pfeil, Drehbewegung | 56 |
| Weitere Drehachse | 58 |
| Pfeil, Drehbewegung | 60 |
| Einrichtung zur Drehmomentübertragung | 62 |

## Patentansprüche

1. Höhenverstellungsvorrichtung (18) für ein Mobilfundament (16), umfassend
- eine Stange (20) mit einem Gewindeabschnitt,
- eine auf dem Gewindeabschnitt verstellbar gehaltene und eine Abstützfläche (22) aufweisende Gewindeplatte (24), und
- ein einen Hohlraum (26) aufweisendes Rohr (28),
wobei das Rohr (28) bei einer Außenseite (30) in einer Mantelfläche wenigstens eine Wandaussparung (32) umfasst, wodurch die Stange (20) seitlich derart in den Hohlraum (26) ragt, dass eine Längsachse der Stange (20) nicht parallel zu einer Längsachse des Rohres (28) ist, und wobei die Höhenverstellungsvorrichtung (18) derart ausgestaltet ist, dass die Stange (20) relativ zum Rohr (28) wenigstens anteilig um eine Achse (34) parallel zur Längsachse des Rohres (28) drehbar ist.

2. Höhenverstellungsvorrichtung (18) nach dem vorhergehenden Anspruch, wobei das Rohr (28) zwei zueinander parallele und bevorzugt plane Außenseiten (30a, 30b) umfasst und/oder als Rechteckrohr (28) ausgestaltet ist.

3. Höhenverstellungsvorrichtung (18) nach einem der vorhergehenden Ansprüche, wobei die Stange (20) an einem dem Rohr (28) abgewandten Ende eine Einrichtung zur Drehmomentübertragung (62) umfasst.

4. Höhenverstellungsvorrichtung (18) nach einem der vorhergehenden Ansprüche, wobei die Höhenverstellungsvorrichtung (18) eine Mehrzahl an Stangen (20) umfasst und wobei das Rohr (28) auf der Außenseite (30) mehrere zur Anzahl an Stangen (20) korrespondierende Wandaussparungen (32) umfasst, wodurch die Stangen (20) in den Hohlraum (26) ragen.

5. Mobilfundamentvorrichtung (12) umfassend ein Mobilfundament (16) und eine Höhenverstellungsvorrichtung (18) nach einem der vorhergehenden Ansprüche,
wobei das Mobilfundament (16) eine Oberseite (38) mit einer Auflagefläche (40) und eine der Oberseite (38) gegenüberliegende bodenseitige Unterseite (42) umfasst und wenigstens eine senkrecht zur Auflagefläche (40) verlaufende und zur Unterseite (42) durchgehende Öffnung (48) umfasst, wobei die Stange (20) mit einem dem Rohr (28) abgewandten Ende in die Öffnung (48) des Mobilfundamentes (16) ragt und die Abstützfläche (22) der Gewindeplatte (24) an der Unterseite (42) des Mobilfundamentes (16) angeordnet ist.

6. Mobilfundamentvorrichtung (12) nach dem vorhergehenden Anspruch, wobei die Mobilfundamentvorrichtung (12) derart ausgestaltet ist, dass die Stange (20) relativ zum Mobilfundament (16) entlang einer Richtung senkrecht zur Auflagefläche (40) verschiebbar ist, insbesondere mittels einer Drehbewegung (56) der Stange (20) um eine axiale Erstreckungsachse (54) der Stange (20).

7. Mobilfundamentvorrichtung (12) nach einem der vorhergehenden Mobilfundamentvorrichtungsansprüche, wobei das Mobilfundament (16) zur drehfesten Lagerung der Gewindeplatte (24) auf der Unterseite (42) eine Aussparung (50) umfasst.

8. Mobilfundamentvorrichtung (12) nach dem vorhergehenden Anspruch, wobei die senkrecht zur Auflagefläche (40) verlaufende und zur Unterseite durchgehende Öffnung (48) in der Aussparung (50) angeordnet ist.

9. Mobilfundamentvorrichtung (12) nach einem der vorhergehenden Mobilfundamentvorrichtungsansprüche, wobei das Mobilfundament (16) zum Einsenken des Rohres (28) im Mobilfundament (16) auf der Unterseite (42) eine weitere Aussparung (52) umfasst.

10. Mobilfundamentvorrichtung (12) nach dem vorhergehenden Anspruch, wobei die weitere Aussparung (52) in einer Länge mit einer Länge des Rohres (28) korrespondiert und/oder sich über die gesamte Unterseite (42) des Mobilfundamentes (16) erstreckt.

11. Mobilfundamentvorrichtung (12) nach den Ansprüchen 7 und 9, wobei die Aussparung (50) als Vertiefung in der weiteren Aussparung (52) ausgestaltet ist.

12. Mobilfundamentvorrichtung (12) nach einem der vorhergehenden Mobilfundamentvorrichtungsansprüche, wobei das Mobilfundament (16) auf der Oberseite (38) einen sich entlang der Auflagefläche (40) erstreckenden vertikalen Fortsatz (46) umfasst.

13. Mobilfundamentvorrichtung (12) nach dem vorhergehenden Mobilfundamentvorrichtungsanspruch, wobei die durchgehende Öffnung (48) durch den vertikalen Fortsatz (46) verläuft.

14. Mobilfundamentvorrichtung (12) nach einem der vorhergehenden Mobilfundamentvorrichtungsansprüche, wobei das Mobilfundament (16) Befestigungsmittel umfasst, die bevorzugt auf der Auflagefläche (40) angebracht sind.

15. System (10) umfassend eine Mobilfundamentvorrichtung (12) nach einem der vorhergehenden Mobilfundamentvorrichtungsansprüche und eine Packstation (14).

## Claims

1. Height-adjusting apparatus (18) for a mobile foundation (16), comprising
- a rod (20) with a threaded portion,
- a threaded plate (24), which is retained in an adjustable manner on the threaded portion and has a supporting surface (22), and
- a tube (28), which has a cavity (26),
wherein the tube (28) comprises at least one wall aperture (32) in a lateral surface of an outer side (30), as a result of which the rod (20) projects laterally into the cavity (26) such that a longitudinal axis of the rod (20) is not parallel to a longitudinal axis of the tube (28), and wherein the height-adjusting apparatus (18) is configured such that the rod (20) can be rotated relative to the tube (28) at least in part about an axis (34) parallel to the longitudinal axis of the tube (28).

2. Height-adjusting apparatus (18) according to the preceding claim, wherein the tube (28) comprises two mutually parallel and preferably planar outer sides (30a, 30b) and/or is configured in the form of a rectangular tube (28).

3. Height-adjusting apparatus (18) according to either of the preceding claims, wherein, at an end which is directed away from the tube (28), the rod (20) comprises a torque-transmission device (62).

4. Height-adjusting apparatus (18) according to one of the preceding claims, wherein the height-adjusting apparatus (18) comprises a plurality of rods (20), and wherein, on the outer side (30), the tube (28) comprises a plurality of wall apertures (32) corresponding to the number of rods (20), as a result of which the rods (20) project into the cavity (26).

5. Mobile-foundation apparatus (12) comprising a mobile foundation (16) and a height-adjusting apparatus (18) according to one of the preceding claims,
wherein the mobile foundation (16) comprises an upper side (38) with a bearing surface (40) and comprises a bottom, underside (42), which is located opposite the upper side (38), and also comprises at least one opening (48), which runs perpendicularly in relation to the bearing surface (40) and is continuous all the way to the underside (42), wherein the rod (20) projects into the opening (48) of the mobile foundation (16) by way of an end which is directed away from the tube (28), and the supporting surface (22) of the threaded plate (24) is arranged on the underside (42) of the mobile foundation (16).

6. Mobile-foundation apparatus (12) according to the preceding claim, wherein the mobile-foundation apparatus (12) is configured such that the rod (20) can be displaced relative to the mobile foundation (16) along a direction perpendicular to the bearing surface (40), in particular by means of a rotary movement (56) of the rod (20) about an axial extent axis (54) of the rod (20).

7. Mobile-foundation apparatus (12) according to one of the preceding mobile-foundation-apparatus claims, wherein the mobile foundation (16) comprises an aperture (50) in order for the threaded plate (24) to be mounted in a rotationally fixed manner on the underside (42).

8. Mobile-foundation apparatus (12) according to the preceding claim, wherein the opening (48), which runs perpendicularly in relation to the bearing surface (40) and is continuous all the way to the underside is arranged in the aperture (50).

9. Mobile-foundation apparatus (12) according to one of the preceding mobile-foundation-apparatus claims, wherein the mobile foundation (16) comprises a further aperture (52) in order for the tube (28) to be incorporated in a recessed state on the underside (42) of the mobile foundation (16).

10. Mobile-foundation apparatus (12) according to the preceding claim, wherein the further aperture (52) corresponds in length with a length of the tube (28) and/or extends over the entire underside (42) of the mobile foundation (16).

11. Mobile-foundation apparatus (12) according to Claims 7 and 9, wherein the aperture (50) is configured in the form of a depression in the further aperture (52).

12. Mobile-foundation apparatus (12) according to one of the preceding mobile-foundation-apparatus claims, wherein, on the upper side (38), the mobile foundation (16) comprises a vertical extension (46), which extends along the bearing surface (40).

13. Mobile-foundation apparatus (12) according to the preceding mobile-foundation-apparatus claim, wherein the continuous opening (48) runs through the vertical extension (46).

14. Mobile-foundation apparatus (12) according to one of the preceding mobile-foundation-apparatus claims, wherein the mobile foundation (16) comprises fastening means, which are preferably fitted on the bearing surface (40).

15. System (10) comprising a mobile-foundation apparatus (12) according to one of the preceding mobile-foundation-apparatus claims and also comprising a parcel locker (14).

## Revendications

1. Dispositif de réglage en hauteur (18) pour une fondation mobile (16), comprenant
- une tige (20) avec une section filetée,
- une plaque filetée (24) maintenue de manière réglable sur la section filetée et présentant une surface de soutien (22), et
- un tube (28) présentant une cavité (26),
le tube (28) comprenant sur un côté extérieur (30) dans une surface d'enveloppe au moins un évidement de paroi (32), à travers lequel la tige (20) fait saillie latéralement dans la cavité (26) de telle sorte qu'un axe longitudinal de la tige (20) n'est pas parallèle à un axe longitudinal du tube (28), et le dispositif de réglage en hauteur (18) étant conçu de telle sorte que la tige (20) peut tourner par rapport au tube (28) au moins en partie autour d'un axe (34) parallèle à l'axe longitudinal du tube (28).

2. Dispositif de réglage en hauteur (18) selon la revendication précédente, dans lequel le tube (28) comprend deux côtés extérieurs (30a, 30b) parallèles entre eux et de préférence plans et/ou est conçu sous forme de tube rectangulaire (28).

3. Dispositif de réglage en hauteur (18) selon l'une quelconque des revendications précédentes, dans lequel la tige (20) comprend, à une extrémité détournée du tube (28), un appareil de transmission de couple (62).

4. Dispositif de réglage en hauteur (18) selon l'une quelconque des revendications précédentes, dans lequel le dispositif de réglage de hauteur (18) comprend une pluralité de tiges (20) et dans lequel le tube (28) comprend, sur le côté extérieur (30), plusieurs évidements de paroi (32) correspondant au nombre de tiges (20), à travers lesquels les tiges (20) font saillie dans la cavité (26).

5. Dispositif de fondation mobile (12) comprenant une fondation mobile (16) et un dispositif de réglage en hauteur (18) selon l'une quelconque des revendications précédentes,
la fondation mobile (16) comprenant un côté supérieur (38) avec une surface d'appui (40) et un côté inférieur (42) côté sol opposé au côté supérieur (38) et comprenant au moins une ouverture (48) s'étendant perpendiculairement à la surface d'appui (40) et traversant le côté inférieur (42), la tige (20) faisant saillie par une extrémité détournée du tube (28) dans l'ouverture (48) de la fondation mobile (16) et la surface d'appui (22) de la plaque filetée (24) étant agencée sur le côté inférieur (42) de la fondation mobile (16).

6. Dispositif de fondation mobile (12) selon la revendication précédente, dans lequel le dispositif de fondation mobile (12) est conçu de telle sorte que la tige (20) peut être déplacée par rapport à la fondation mobile (16) le long d'une direction perpendiculaire à la surface d'appui (40), notamment au moyen d'un mouvement de rotation (56) de la tige (20) autour d'un axe d'extension axial (54) de la tige (20).

7. Dispositif de fondation mobile (12) selon l'une quelconque des revendications de dispositif de fondation mobile précédentes, dans lequel la fondation mobile (16) comprend un évidement (50) pour le montage solidaire en rotation de la plaque filetée (24) sur le côté inférieur (42).

8. Dispositif de fondation mobile (12) selon la revendication précédente, dans lequel l'ouverture (48) s'étendant perpendiculairement à la surface d'appui (40) et traversant le côté inférieur est agencée dans l'évidement (50).

9. Dispositif de fondation mobile (12) selon l'une quelconque des revendications de dispositif de fondation mobile précédentes, dans lequel la fondation mobile (16) comprend un autre évidement (52) sur le côté inférieur (42) pour l'enfoncement du tube (28) dans la fondation mobile (16).

10. Dispositif de fondation mobile (12) selon la revendication précédente, dans lequel l'autre évidement (52) correspond dans une longueur à une longueur du tube (28) et/ou s'étend sur tout le côté inférieur (42) de la fondation mobile (16).

11. Dispositif de fondation mobile (12) selon les revendications 7 et 9, dans lequel l'évidement (50) est conçu sous forme de creux dans l'autre évidement (52).

12. Dispositif de fondation mobile (12) selon l'une quelconque des revendications de dispositif de fondation mobile précédentes, dans lequel la fondation mobile (16) comprend, sur le côté supérieur (38), un prolongement vertical (46) s'étendant le long de la surface d'appui (40).

13. Dispositif de fondation mobile (12) selon la revendication de dispositif de fondation mobile précédente, dans lequel l'ouverture traversante (48) s'étend à travers le prolongement vertical (46).

14. Dispositif de fondation mobile (12) selon l'une quelconque des revendications de dispositif de fondation mobile précédentes, dans lequel la fondation mobile (16) comprend des moyens de fixation qui sont de préférence installés sur la surface d'appui (40).

15. Système (10) comprenant un dispositif de fondation mobile (12) selon l'une quelconque des revendications de dispositif de fondation mobile précédentes et une station d'emballage (14).
